# EUROPEAN PATENT APPLICATION

(11) **EP 4 011 597 A1**
(43) Date of publication of application: **15.06.2022**
(21) Application number: 21197428.2
(22) Date of filing: 17.09.2021
(51) Int. Cl.: B29C 49/20, B29D 23/00, F02M 35/10, F02M 35/104

(54) **AN AIR DUCT WHICH CAN BE PRODUCED BY MEANS OF BLOW MOLDING**

(30) Priority: 10.12.2020 TR 202020243
(71) Applicant: Özler Plastik San. Ve Tic. A.S., No:6-8 Avcilar/Istanbul (TR)
(72) Inventor: OZADAM, MURAT, Istanbul (TR)
(74) Representative: Kaya, Erdem

(57) **Abstract**

The present invention relates to at least one air duct (30) having at least one first part (30a) which can be produced by means of blow molding in at least one mold (10) which has at least one mold cavity (11) and at least one assembly gap (12), and at least one second part (30b) which can be joined with the first part (30a) at the same time by being positioned in said assembly gap (12) during production of said first part (30a). The improvement of the present invention is that the subject matter air duct (30) comprises at least one holding part (31) which can increase the contact surface area, in order to improve joining of the second part (30b), which can be positioned on the assembly gap (12), to the first part (30a) in a resistant manner.

## Description

### TECHNICAL FIELD

The present invention relates to at least one air duct having at least one first part which can be produced by means of blow molding in at least one mold which has at least one mold cavity and at least one assembly gap, and at least one second part which can be joined with the first part at the same time by being positioned in said assembly gap during production of said first part.

### PRIOR ART

Plastics and their derivative industrial products are becoming frequent and increasing in any kind of field in the world. Depending on this, pluralities of machines or methods are developed for the production of sub-industry products which are fed by this sector. Various materials which are the raw substance of plastic are shaped by means of methods like injection, plastic blow molding.

Plastic is shaped by pouring, compressing or draining of macro-molecules into a vessel with the help of heat and pressure. In automotive industry, various parts are produced by means of molding method from plastic or rubber derivative materials. One of these methods is plastic blow molding method. In blow molding method, thermoplastic raw substance with low melt flow index flows downwardly in a slow manner as a result of the effect of gravity, in the form of a hose through the closed mold. After the hose is substantially extended, a nozzle extends into it and air input is provided. By means of pressured air, plastic is pushed towards cavity of mold in a manner taking the shape of the mold, and after it is sufficiently cooled, the mold is opened, and product is removed from the mold.

In the known state of the art, during production by means of blow molding, in case of notched and curved fixation protrusions, the filling of the flowing plastic material to these gaps is difficult and these brackets must be externally assembled to the part. The methods, used for assembling, are welded production, cored production, tabbed part injection production, and production by means of blow molding method. In welded production, the flap and the hot hose are produced separately and welded to each other. In this production method, extra welding process occurs and there are disadvantages like the change in material characteristics during welding, need of extra labor. In the cored production method, shaping by means of core is realized in the mold. However, in this method, since the cores have limited geometry and curved structure, the product variety is delimited.

In the known state of the art, in the patent with number EP19920905605, a method developed by using blow molding method is described, and in this method, additional connection parts which have been produced beforehand are placed into the mold and the hot hose, drained in the molten form through a feeding chamber, passes through these connection parts and mold cavity. When the hot hose drainage finishes, blowing process is applied by giving air and the product is connected by means of connection parts and the product is turned into the final form. Here, the connection parts are placed in a single direction and the connection part cannot be connected to the curved points of the pipe. Moreover, since the connection parts are cold, the points of the hot hose, which contact these parts, cool rapidly, and tightness problem is faced between the hot hose and the connection parts. In this method, final product can be produced in a single process. However, when intense force is exerted to the workpiece formed by multiple components produced by means of this method, the joined parts can separate from each other. At the same time, the plastic injection part which is in assembled form on the plastic blowing part can rotate slightly due to the force which occurs, and dimension tolerance of the assembly flaps can deteriorate.

The application with number EP2159035 known in the art relates to production of a hollow plastic body. In this structure, the thermoplastic material is blown by means of blowing method in a mold under temperature. During this blowing, a support element can be provided in the mold. This support element can be joined on the body in a fixed manner. In the patent application with number EP2159035, it is seen in Figure 2 that these support elements are assembled also in the regions where the molten flows at the curved corner. This support element is placed in a single direction along the flow, and it does not have a structure which is curved with respect to different axes along the curved corner. Therefore, it can be easily moved in forward-backward direction and in rotation direction.

The application with number US2014170353 known in the art relates to an embodiment for forming a composite component. In this structure, fiber-reinforced thermoplastic element is inserted continuously to a molding device. The thermoplastic element contacts and joins with a different element which exists in the molding device, and thanks to this, a two-parted joint structure is provided. In this invention, the fiber-reinforced parts, wherein the molt flows, do not exist in the curved corner parts. Therefore, it can be easily moved in the forward-backward direction and in rotation direction.

In the application with number JPH0592480 known in the art, a molding device is given. This molding device is essentially a blowing device known in the art. In this molding device, there is an insert part in the mold cavity. This insert part is positioned in a manner facing the mold. The insert part contacts the melt material during molding, and joining is provided. In this invention, the molten plastic material does not pass through the insert part, and the assembly of the insert part is provided through only one direction.

The applications with numbers US4959190 and JPH0326522 known in the art also relate to blow molding machines and the products obtained in molding machines. In these molding machines, fixation of a second part onto the molding molten is described. In these inventions, in a similar manner, the opposite part through which the molten passes is not positioned in a manner extending along the comer part.

All of these structures known in the art are based on joining blow molds with a different material during molding. However, in the products obtained by means of these methods, joining of the two parts to each other can be faulty. Since the two parts cannot be joined to each other in a homogenous manner, separations can occur during usage of the product. This may lead to unfavorable user experiences.

As a result, because of the abovementioned problems, an improvement is required in the related technical field.

### BRIEF DESCRIPTION OF THE INVENTION

The present invention relates to an air duct which can be produced by means of blow molding, for eliminating the abovementioned disadvantages and for bringing new advantages to the related technical field.

An object of the present invention is to provide an air duct having at least two parts and which can be produced by means of blow molding.

In order to realize the abovementioned objects and the objects which are to be deducted from the detailed description below, the present invention is at least one air duct having at least one first part which can be produced by means of blow molding in at least one mold which has at least one mold cavity and at least one assembly gap, and at least one second part which can be joined with the first part at the same time by being positioned in said assembly gap during production of said first part. Accordingly, the improvement is that the subject matter air duct comprises at least one holding part which can increase the contact surface area, in order to improve joining of the second part, which can be positioned on the assembly gap, to the first part in a resistant manner. Thus, the air duct is produced in a single process and more strength is realized when compared with the structures known in the present art as a result of this single process.

In a possible embodiment of the present invention, said holding part is essentially provided in hole form. Thus, resistant joining is provided by means of filling molten parison into the inner part of this hole.

In a possible embodiment of the present invention, the subject matter is a pipe used in ventilation systems of vehicles. Thus, such pipes obtain a more resistant structure.

In a possible embodiment of the present invention, the following steps are provided: producing the second part such that there is the holding part thereon; placing the second part to the mold and closing the mold; draining the molten parison, blowing the molten parison; cooling the mold; and removing from the mold. Thus, the air duct is produced by means of a single process.

### BRIEF DESCRIPTION OF THE FIGURES

In Figure 1, a representative perspective view of a mold which provides production of the subject matter air duct is given.
In Figure 2, a representative perspective view of a first mold part which provides production of the subject matter air duct is given.
In Figure 3, a representative perspective view of a second mold part which provides production of the subject matter air duct is given.
In Figure 4, a representative perspective view of the subject matter air duct is given.
In Figure 5, a representative perspective view of the second part which can be positioned on the subject matter air duct is given.
In Figure 6, a representative perspective view of the subject matter air duct and the cross-sectional view and detailed view related to this perspective view are given.

### DETAILED DESCRIPTION OF THE INVENTION

In this detailed description, the subject matter is explained with references to examples without forming any restrictive effect only in order to make the subject more understandable.

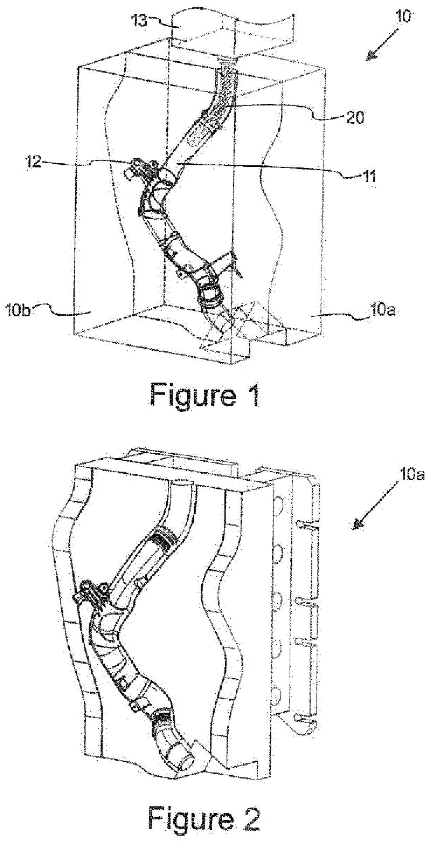

In Figure 1, 2 and 3, one each representative perspective views of a mold (10) which provides production of the subject matter air duct (30) are given. Accordingly, said mold (10) has at least two parts, namely, at least one first mold part (10a) and at least one second mold part (10b). There is at least one mold cavity (11) between said first mold part (10a) and said second mold part (10b) for providing shaping of the air duct (30). In a possible embodiment of the present invention, at least one assembly gap (12) can be positioned at predetermined locations, depending on the shape of the air duct (30), on the mold cavity (11). Said assembly gap (12) provides placement of the elements, which are desired to be assembled, on the air duct (30).

In the mold cavity (11), a parison (20), which is in molten form and which is preferably plastic-based, is shaped by means of blow molding method. In order to realize this, there is at least one extruder head (13) essentially at the upper vicinity of the mold (10). Said extruder head (13) provides release of the parison (20), which is in molten form and which is preferably plastic-based and used in molding process, to the mold cavity (11). Moreover, the mold (10) can be connected to at least one blowing needle (not shown in the figures). Said blowing needle is essentially connected to a compressor and enters the inner part of the parison (20) released into the mold (10) and provides blowing thereof with air and depending on this, it provides the parison (20) to take the shape of the mold cavity (11).

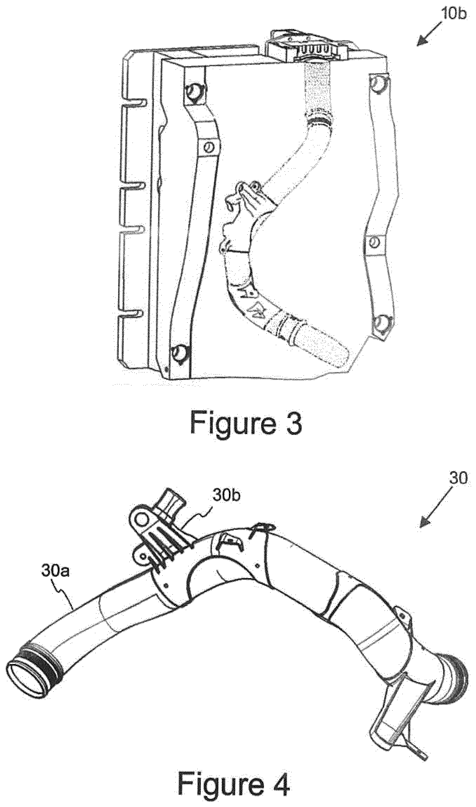

In Figure 4, a representative perspective view of the subject matter air duct (30) is given. Accordingly, in a possible embodiment, said air duct (30) is an air duct (30) used in carrying air in vehicles and said air duct (30) is particularly an air duct (30) which carries air between the turbo charge and the intercooler in the motor part of the vehicle. The air duct (30) has at least one first part (30a) and at least one second part (30b). Said first part (30a) is essentially the part which extends along the air duct (30). And as mentioned, said first part (30a) is configured in a manner allowing air flow through itself at the location where it will be used.

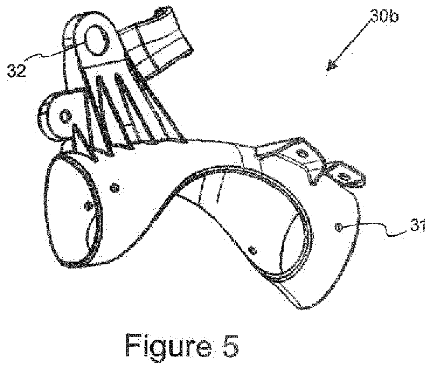

In Figure 5, a representative perspective view of the second part (30b) which can be positioned on the subject matter air duct (30) is given. Accordingly, said second part (30b) is used in positioning during the use of the first part (30a). In other words, said second part (30b) is configured to provide fixation of the first part (30a) at the location where it will be used. In order to provide this, there can be assembly holes (32) on the second part (30b).

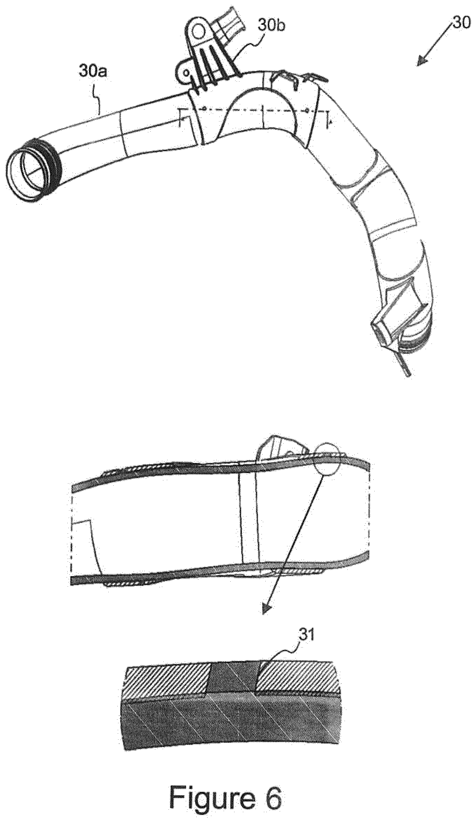

In Figure 6, a representative perspective view of the subject matter air duct (30) and the cross-sectional view and detailed view related to this perspective view are given. Accordingly, there is at least one holding part (31) on the second part (30b). In other possible embodiments of the present invention, said holding part (31) can be a surface formed in groove, protrusion, square, circular or other different shapes. In a possible embodiment of the present invention, the holding part (31) is preferably provided in the form of a hole on the second part (30b). And preferably four holding parts (31) are provided on the second part (30b). The holding part (31) provides obtaining a more resistant structure in connecting of the second part (30b) to the first part (30a). The manner for providing this is the entering of the parison (20) into the holding part (31) and cooling thereof while the first part (30a) is being produced by means of the blowing method. In other words, while the parison (20) is being blown, it is placed into the holding part (31) and solidifies. Thanks to this, the two parts stay connected even in case separation through the contact surfaces occurs.

The application method of the present invention respectively comprises the stages of producing the second parts (30b), heating the second parts (30b), placing the second parts (30b) to the mold and closing the mold, draining the parison (20), blowing the parison (20), waiting in the mold (10) and removing from the mold (10).

The steps included by these stages are described as follows;

In the stage of production of the second part (30b): a second part (30b), which shall be placed into the mold (10), is produced by means of pre-determined methods. In a possible embodiment of the present invention, the second part (30b) can be produced by means of the plastic injection method. The subject, that is important in this stage, is that holding parts (31) are also produced on the second part (30b).

In the stage of heating of the second part (20b): the second part (30b), which shall be placed to the mold (10) and preferably made of plastic raw substance, is subjected to a heating process. Said heating process is not a must for our invention, but said heating process provides contribution in prevention of shape deteriorations which may occur during cooling in the air duct (30). Preferably, the second part (30b) can be heated by means of a heating cabinet. The product is heated to a temperature value between 100-150°C in the cabinet. This process prevents early cooling and solidifying of the plastic at the joining parts by preventing early cooling when the parison (20), which flows in hot form into the mold (10), contacts the second part (30b) during production.

In the stage of placement of the second part (30b) to the mold (10) and closing of the mold (10): the second parts (30b) are placed to the assembly gaps (12) provided in the mold (10). At least one second part (30b) is placed to the assembly gap (12). However, in possible embodiment of the present invention, pluralities of second parts (30b) and assembly gaps (12) are provided. After placement of the second parts (30b) into the mold (10), the mold (10) is closed.

In the stage of draining the parison (20): after the mold (10) is closed, the molten form plastic-based parison (20) is drained from the extruder head (13). When the parison (20) reaches the inlet part (not shown in the figures) provided at the lower part of the mold (10), the draining process stops.

In the blowing stage: when the parison (20) flow is stopped, air is given from the extruder head (13) and the parison (20) is provided to be blown. When the parison (20) comes to the lowermost part of the mold (10), the lower and the upper parts of the mold (10) are closed and the parison (20) flow is automatically stopped. Afterwards, also as a result of the air pressure applied with the help of the blowing needle, air is given therein by means of passing into the parison (20), and afterwards, the parison (20) fills into the mold cavity (11) which is at lower temperature and the parison (20) also fills into the inner walls of the second part (30b) and into the holding parts (31). Meanwhile, the parison (20) becomes hardened and the blowing process is completed.

In the stage of waiting in the mold (10); after hardening of the parison (20), cooling the hot parison (20) in the mold, in other words, the cycle duration lasts between 50-150 seconds. The parison (20) is cooled until a temperature value between 100-150°C in the mold (10). As the parison (20) is cooled, it turns into the first part (30a). The second parts (30b), placed to the mold (10) by being subjected to heating process, are cooling together with the first part (30a).

In the stage of removal from the mold (10); the air duct (30), which arrives at the desired cooling level, is removed from the mold (10), whereon said air duct (30) is positioned, by means of separating the first mold part (10a) and the second mold part (10b) from each other.

Together with all these embodiments; while the first part (30a) of the subject matter air duct (30) is being produced, the assembly of the second part (30b) is also assembled at the same time. By means of the holding part (31) provided on the second part (30b), the contact directions and the contact surfaces of the first part (30a) and the second part (30b) are increased. Thanks to this, the first part (30a) and the second part (30b) can be joined in a more resistant manner when compared with the present art.

The protection scope of the present invention is set forth in the annexed claims and cannot be restricted to the illustrative disclosures given above, under the detailed description. It is because a person skilled in the relevant art can obviously produce similar embodiments under the light of the foregoing disclosures, without departing from the main principles of the present invention.

### REFERENCE NUMBERS

- 10: Mold
- 10a: First mold part
- 10b: Second mold part
- 11: Mold cavity
- 12: Assembly gap
- 13: Extruder head
- 20: Parison
- 30: Air duct
- 30a: First part
- 30b: Second part
- 31: Holding part
- 32: Assembly hole

## Claims

1. At least one air duct (30) having at least one first part (30a) which can be produced by means of blow molding in at least one mold (10) which has at least one mold cavity (11) and at least one assembly gap (12), and at least one second part (30b) which can be joined with the first part (30a) at the same time by being positioned in said assembly gap (12) during production of said first part (30a), wherein the subject matter air duct (30) comprises at least one holding part (31) which can increase the contact surface area, in order to improve joining of the second part (30b), which can be positioned on the assembly gap (12), to the first part (30a) in a resistant manner.

2. The air duct (30) according to claim 1, wherein said holding part (31) is essentially provided in hole form.

3. The air duct (30) according to claim 1, wherein the subject matter is a pipe used in ventilation systems of vehicles.

4. The method for production of an air duct (30) according to claim 1, wherein the said method comprises the following steps: producing the second part (30b) such that there is the holding part (31) thereon; placing the second part (30b) to the mold (10) and closing the mold (10); draining the molten parison (20), blowing the molten parison (20), filling hot plastic raw material into the holding part (31), cooling the mold (10), and removing from the mold (10).
